# DEMANDE DE BREVET EUROPEEN

(11) **EP 4 391 345 A1**
(43) Date de publication de la demande: **26.06.2024**
(21) Numéro de dépôt: 23217871.5
(22) Date de dépôt: 19.12.2023
(51) Int. Cl.: H02M 7/00, H02M 7/48, H02M 7/493

(54) **ONDULEUR POUR MACHINE ÉLECTRIQUE**

(30) Priorité: 22.12.2022 FR 2214296
(71) Demandeur: Valeo eAutomotive France SAS, 95892 Cergy Pontoise (FR)
(72) Inventeur: MORTAIN, Eloi, 95892 Cergy Pontoise (FR); POUILLY, Aurélien, 95892 Cergy Pontoise (FR); ROUET, Amaury, 95892 Cergy Pontoise (FR); NARAYANAN, Sreenath, 600130 Chennai, Tamil Nadu (IN)
(74) Mandataire: Valeo Powertrain Systems

(57) **Abrégé**

La présente invention vise un onduleur (1), comprenant :
- un module capacitif (2) ;
- un premier module de puissance (3a) relié au module capacitif (2) par une première connexion à courant continu (4a) et comprenant une première connexion à courant alternatif (5a) disposée d'un côté opposé du premier module de puissance (3a) ;
- un deuxième module de puissance (3b) relié au module capacitif (2) par une deuxième connexion à courant continu (4b), et comprenant une deuxième connexion à courant alternatif (5b) disposée d'un côté opposé du deuxième module de puissance (3b) ;
les modules de puissance (3a, 3b) étant disposés d'un même côté du module capacitif (2), de part et d'autre d'un plan médian (P) du module capacitif (2), les connexions à courant alternatif (5a, 5b) sont plus proches du plan médian (P) du module capacitif (2) les connexions à courant continu (4a, 4b).

## Description

### DOMAINE TECHNIQUE

La présente invention concerne les équipements électriques tels que les onduleurs, munis de modules de puissance et associés à une machine électrique, par exemple un moteur de véhicule électrique ou hybride.

### ETAT DE LA TECHNIQUE

Comme cela est connu, un véhicule automobile électrique ou hybride comprend un système de motorisation électrique alimenté par une batterie d'alimentation haute tension, généralement supérieur à 100V, via un réseau électrique embarqué haute tension et une pluralité d'équipements électriques auxiliaires alimentés par une batterie d'alimentation basse tension via un réseau électrique embarqué basse tension. La batterie d'alimentation haute tension assure une fonction d'alimentation en énergie du système de motorisation électrique permettant la propulsion du véhicule. Plus précisément, afin de commander la machine électrique entrainant les roues du véhicule, il est connu d'utiliser un onduleur permettant de convertir la tension continue fournie par la batterie d'alimentation haute tension en une ou plusieurs tensions de commande alternatives, par exemple sinusoïdales.

Il est également connu d'intégrer au sein de l'onduleur un dispositif de filtrage capacitif dénommé capacité de liaison ou « DC-link capacitor » pour l'homme du métier, ayant notamment pour fonction la stabilisation de la tension fournie au composant d'électronique de puissance actif de l'onduleur, en particulier un module de puissance alimentant en énergie électrique la machine électrique.

Dans le cadre de véhicules électroniques ou hybrides nécessitant des niveaux élevés de puissance, par exemple un véhicule utilitaire, il est connu d'alimenter une machine électrique par l'intermédiaire de plusieurs modules de puissances, généralement deux modules de puissances délivrant chacun un courant électrique triphasé. Cette architecture utilise alors généralement deux capacités de liaison, chacune étant reliée à un module de puissance.

La machine électrique comprend généralement six phases, chacune des phases étant alimentée par l'un des courants d'un des deux modules de puissance. Néanmoins, cette configuration présente l'inconvénient pour la machine électrique de voir arriver deux courants triphasés issus de sources indépendantes et dont les caractéristiques sont différentes, ce qui peut aboutir à des perturbations du fonctionnement de la machine électrique, ou à minima générer des difficultés dans son pilotage. De plus, dans le cas d'un onduleur à trois phases reliées à ladite machine électrique, les courants de chacun des deux modules de puissances présentant un déphasage similaire doivent être associés au sein d'une interface de connexion pour alimenter une phase de la machine électrique, résultant en une architecture complexe de l'interface de connexion, notamment du fait de la présence d'autres composants telles que des cartes électroniques fixées sur les modules de puissance. Ainsi, la fabrication d'un onduleur dans ces conditions constitue un agencement complexe, et un pilotage difficile.

L'invention vise à résoudre les inconvénients de l'état la technique en proposant une architecture d'onduleur simplifiée, au coût réduit et aux performances améliorées.

### PRESENTATION DE L'INVENTION

Plus précisément, l'invention a pour objet un onduleur, notamment configuré pour être embarqué dans un véhicule automobile, comprenant :
- un module capacitif ;
- un premier module de puissance relié au module capacitif par une première connexion à courant continu et comprenant une première connexion à courant alternatif configurée pour la circulation d'un courant électrique entre le module capacitif et une machine électrique à courant alternatif, la première connexion à courant alternatif étant disposée d'un côté opposé du premier module de puissance par rapport à la première connexion à courant continu ;
- un deuxième module de puissance relié au module capacitif par une deuxième connexion à courant continu, et comprenant une deuxième connexion à courant alternatif configurée pour la circulation d'un courant électrique entre le module capacitif et la machine électrique à courant alternatif, la deuxième connexion à courant alternatif étant disposée d'un côté opposé du deuxième module de puissance par rapport à la deuxième connexion à courant continu ;
le premier module de puissance et le deuxième module de puissance étant disposés d'un même côté du module capacitif, de part et d'autre d'un plan médian du module capacitif, l'onduleur étant caractérisé en ce que la première connexion à courant alternatif du premier module de puissance et la deuxième connexion à courant alternatif du deuxième module de puissance sont plus proches du plan médian du module capacitif que la première connexion à courant continu et la deuxième connexion à courant continu.

Grâce à une telle combinaison de caractéristiques, les modules de puissance d'un tel onduleur présentent des performances de fonctionnement similaires, du fait d'un agencement globalement symétrique de l'onduleur, tout en étant relié au même module capacitif, et sont donc alimentés par un même courant. La première et deuxième connexion à courants alternatifs sont également moins susceptibles de gêner l'agencement de composants supplémentaires de l'onduleur, comme des cartes électroniques pour piloter les modules de puissance.

Avantageusement, la première connexion à courant alternatif du premier module de puissance et la deuxième connexion à courant alternatif du deuxième module de puissance s'étendent dans le plan médian du module capacitif. Dans une telle configuration, les deux modules de puissance sont plus proches l'un de l'autre, ce qui améliore encore la compacité globale de l'onduleur.

Avantageusement la première connexion à courant alternatif du premier module de puissance et la deuxième connexion à courant alternatif du deuxième module de puissance sont mutualisées dans une interface de connexion configurée pour alimenter un moteur à courant alternatif. Dans une telle configuration, l'interface de connexion, de préférence une barre de connexion électrique ou « busbar » pour l'homme du métier, présente des dimensions réduites pour se connecter aux bornes d'une machine électrique par rapport à une architecture standard, dans laquelle les interfaces de connexion sont mutualisées au plus proches des bornes de la machine électrique.

Avantageusement la première connexion électrique à courant alternatif comprend une pluralité de premiers connecteurs électriques, et la deuxième connexion à courant alternatif comprend une pluralité de deuxièmes connecteurs électriques.

Avantageusement les premiers connecteurs de la première connexion à courant alternatif et les deuxièmes connecteurs de la deuxième connexion à courant alternatif dont les courants électriques présentent des angles de déphasage égaux sont associés deux à deux dans une interface de connexion, ladite interface de connexion comprenant au moins trois sorties configurées pour alimenter les phases respectives d'une machine électrique à courant alternatif triphasé. Dans une telle configuration, l'alimentation des phases d'un moteur électrique triphasé se fait au plus proche des modules de puissances, et l'association deux à deux connecteurs présentant des courants électriques de même déphasage dans ces conditions garantit des caractéristiques similaires délivrées par les deux modules de puissance.

Avantageusement, les sorties de l'interface de connexion s'étendent parallèlement au plan médian du module capacitif. Dans une telle configuration, l'orientation et la direction des sorties de l'interface de connexion correspondent directement à une orientation et un sens des connectiques de phases d'un moteur électrique situés en dehors de l'onduleur.

Avantageusement, les sorties de l'interface de connexion sont disposées d'un même côté du premier module de puissance que la première connexion à courant continu

Avantageusement, le premier module de puissance et le deuxième module de puissance sont identiques.

Avantageusement, le module capacitif est une capacité de liaison. Dans une telle configuration, le courant continu alimentant les deux modules de puissances provient de la même capacité de liaison, ce qui renforce encore davantage la symétrie de performances entre les deux modules de puissance.

Avantageusement, les sorties de l'interface de connexion sont disposées d'un même côté du premier module de puissance que la première connexion à courant alternatif.

Avantageusement, l'onduleur comprend en outre une carte électronique pour piloter les modules de puissance s'étendant perpendiculairement au plan médian, l'interface de connexion s'étendant alors parallèlement à ladite carte électronique entre les modules de puissances et la carte électronique et les sorties de l'interface de connexion s'étendent parallèlement au plan médian en passant à travers un orifice de passage de la carte électronique.

Selon un autre aspect de l'invention, celle-ci a trait à un engin de mobilité tel qu'un véhicule électrique ou hybride.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en perspective d'un onduleur selon un mode de réalisation de l'invention ;
La figure 2 est une représentation schématique en vue de face de l'onduleur de la figure 1 en position retirée d'un châssis et d'un couvercle de l'onduleur ;
La figure 3 est une représentation schématique en vue de dessus de l'onduleur de la figure 1, en position retirée d'une carte électronique.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

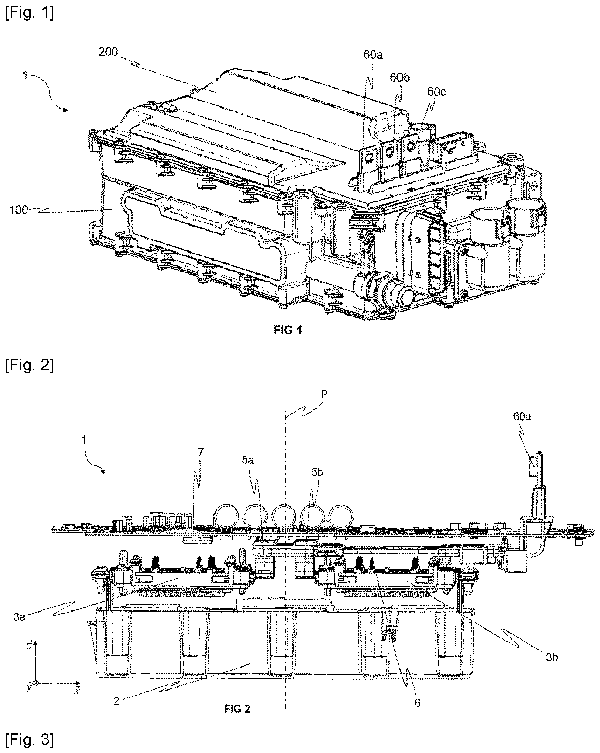

La figure 1 illustre un onduleur 1, par exemple pour un moteur de véhicule électrique ou hybride. L'onduleur 1 comprend un châssis 100 et un couvercle 200 amovible entre une position retirée dans laquelle un espace intérieur du châssis 100 est accessible et une position fermée qui correspond à une position de fonctionnement de l'onduleur 1.

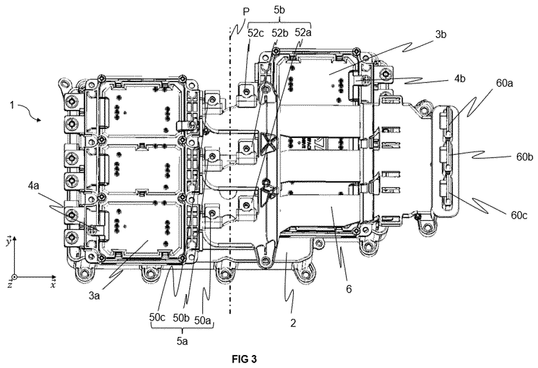

Les figures 2 et 3 illustrent l'onduleur 1 en position retirée du châssis 100 et du couvercle 200. L'onduleur 1 comprend un module capacitif 2, ici une capacité de liaison. La capacité de liaison 2 présente une forme générale sensiblement prismatique parallélépipédique, une longueur de la capacité de liaison 2 s'étendant suivant une direction horizontale X, une largeur de la capacité de liaison 2 s'étendant selon une direction transversale Y et une hauteur de la capacité de liaison 2 s'étendant selon une direction verticale Z. La capacité de liaison 2 présente un plan P médian s'étendant suivant un plan vertical Z, Y, de sorte que la longueur de la capacité 2 correspond à une médiane du plan médian P.

L'onduleur 1 comprend en outre un premier module de puissance 3a relié à la capacité de liaison 2 par une première connexion à courant continu 4a. Par « module de puissance », on entend un ensemble comprenant des composants par lesquels passe de l'énergie alimentant la machine électrique. Ces composants peuvent comprendre des interrupteurs électroniques, tels que par exemple des transistors semi-conducteurs, agencés en circuit électrique pour permettre un passage commandé d'énergie électrique entre la batterie d'alimentation et la machine électrique. En particulier, les composants sont des puces semi-conductrices nues pour lesquels on réalise une encapsulation. Autrement dit, un module de puissance est un ensemble comprenant une pluralité de puces semi-conductrices formant un circuit électrique encapsulées dans un même boîtier. Le premier module de puissance 3a s'étend parallèlement à un plan X, Y, verticalement au-dessus de la capacité de liaison 2.

La première connexion à courant continu 4a permet à la capacité de liaison 2 d'alimenter le premier module de puissance 3a avec un courant continu filtré et stabilisé. La première connexion à courant continu 4a s'étend verticalement selon la direction Z. Le premier module de puissance 3a comprend en outre une première connexion à courant alternatif 5a. Dans le mode de réalisation décrit, la première connexion à courant alternatif 5a comprend une pluralité de premiers connecteurs électriques 50a, 50b, 50c, chacun des premiers connecteurs électriques 50a, 50b, 50c étant alimenté par un courant électrique alternatif présentant un déphasage différent. Les premiers connecteurs 50a, 50b, 50c sont disposés d'un côté opposé du premier module de puissance 3a par rapport à la première connexion à courant continu 4a.

L'onduleur 1 comprend en outre un deuxième module de puissance 3b relié à la capacité de liaison 2 par une deuxième connexion à courant continu 4b. Le deuxième module de puissance 3b s'étend parallèlement au plan X, Y verticalement au-dessus de la capacité de liaison 2 d'un autre côté du plan médian P de la capacité de liaison 2 que le premier module de puissance 3a. Ici, le premier module de puissance 3a et le deuxième module de puissance 3b sont identiques.

La deuxième connexion à courant continu 4b permet à la capacité de liaison 2 d'alimenter le deuxième module de puissance 3b avec un courant continu filtré et stabilisé. La deuxième connexion à courant continu 4b s'étend verticalement selon la direction Z. Le deuxième module de puissance 3b comprend en outre une deuxième connexion à courant alternatif 5b. Dans le mode de réalisation décrit, la deuxième connexion à courant alternatif 5b comprend une pluralité de deuxièmes connecteurs électriques 52a, 52b, 52c, chacun des deuxièmes connecteurs électriques 52a, 52b, 52c étant alimenté par un courant électrique alternatif présentant un déphasage différent. Les deuxièmes connecteurs 52a, 52b, 52c sont disposés d'un côté opposé du deuxième module de puissance 3b par rapport à la deuxième connexion à courant continu 4b.

Les premiers connecteurs 50a, 50b, 50c sont plus proches du plan médian P de la capacité de liaison 2 que le premier connecteur 4a. Les deuxièmes connecteurs 52a, 52b, 52c sont plus proches du plan médian P de la capacité de liaison 2 que la deuxième connexion à courant continu 4b. Du fait de cet agencement sensiblement symétrique, les modules de puissance 3a, 3b présentent des performances de fonctionnement similaires.

Les premiers connecteurs 50a, 50b, 50c et les deuxièmes connecteurs 52a, 52b, 52c dont les courants électriques présentent des angles de déphasages égaux sont associés deux à deux dans une interface de connexion 6 comprenant trois sorties 60a, 60b, 60c configurées pour alimenter les phases respectives d'un moteur à courant alternatif triphasé. Dans le mode de réalisation décrit, l'interface de connexion 6 est une barre de connexion électrique, ou « busbar » pour l'homme du métier. L'interface de connexion 6 s'étend perpendiculairement au plan médian P de la capacité de liaison 2 et les sorties de l'interface de connexion 60a, 60b, 60c s'étendent parallèlement au plan médian P et du côté de la deuxième connexion à courant continu 4b. Avantageusement, les sorties de l'interface de connexion 60a, 60b, 60c sont disposées du côté de la première connexion à courant continu 4a.

En particulier, que la première connexion à courant alternatif 5a du premier module de puissance 3a et la deuxième connexion à courant alternatif 5b du deuxième module de puissance 3b s'étendent dans le plan médian P. Dans ce cas, les modules de puissance 3a, 3b présentent des performances de fonctionnement encore plus similaires, notamment sensiblement identiques.

La figure 2 diffère de la figure 3 en ce que dans la figure 2 est illustrée une carte électronique 7 s'étendant perpendiculairement au plan médian P. La carte électronique 7 est située verticalement au-dessus des modules de contrôle 3a, 3b, l'interface de connexion 6 s'étend entre les modules de puissances 3a, 3b et la carte électronique 7. Les sorties de l'interface de connexion 60a, 60b, 60c s'étendent également à travers un orifice de passage de la carte électronique 7.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Onduleur (1), notamment configuré pour être embarqué dans un véhicule automobile, comprenant :
- un module capacitif (2) ;
- un premier module de puissance (3a) relié au module capacitif (2) par une première connexion à courant continu (4a) et comprenant une première connexion à courant alternatif (5a) configurée pour la circulation d'un courant électrique entre le module capacitif (2) et une machine électrique à courant alternatif (5a), la première connexion à courant alternatif (5a) étant disposée d'un côté opposé du premier module de puissance (3a) par rapport à la première connexion à courant continu (4a) ;
- un deuxième module de puissance (3b) relié au module capacitif (2) par une deuxième connexion à courant continu (4b), et comprenant une deuxième connexion à courant alternatif (5b) configurée pour la circulation d'un courant électrique entre le module capacitif (2) et la machine électrique à courant alternatif, la deuxième connexion à courant alternatif (5b) étant disposée d'un côté opposé du deuxième module de puissance (3b) par rapport à la deuxième connexion à courant continu (4b) ;
le premier module de puissance (3a) et le deuxième module de puissance (3b) étant disposés d'un même côté du module capacitif (2), de part et d'autre d'un plan médian (P) du module capacitif (2), l'onduleur (1) étant **caractérisé en ce que** la première connexion à courant alternatif (5a) du premier module de puissance (3a) et la deuxième connexion à courant alternatif du deuxième (5b) module de puissance (3b) sont plus proches du plan médian (P) du module capacitif (2) que la première connexion à courant continu (4a) et la deuxième connexion à courant continu (4b).

2. Onduleur (1) selon la revendication précédente, **caractérisé en ce que** la première connexion à courant alternatif (5a) du premier module de puissance (3a) et la deuxième connexion à courant alternatif (5b) du deuxième module de puissance (3b) s'étendent dans le plan médian (P) du module capacitif (2).

3. Onduleur (1) selon l'une quelconque des revendications précédentes, **caractérisé en ce que** la première connexion à courant alternatif (5a) du premier module de puissance (3a) et la deuxième connexion à courant alternatif (5b) du deuxième module de puissance (3b) sont mutualisées dans une interface de connexion (6) configurée pour alimenter un moteur à courant alternatif.

4. Onduleur (1) selon l'une quelconque des revendications précédentes, **caractérisé en ce que** la première connexion électrique à courant alternatif (5a) comprend une pluralité de premiers connecteurs électriques (50a, 50b, 50c), et la deuxième connexion à courant alternatif (5b) comprend une pluralité de deuxièmes connecteurs électriques (52a, 52b, 52c).

5. Onduleur (1) selon la revendication 4, **caractérisé en ce que** les premiers connecteurs (50a, 50b, 50c) de la première connexion à courant alternatif (5a) et les deuxièmes connecteurs (52a, 52b, 52c) de la deuxième connexion à courant alternatif (5b) dont les courants électriques présentent des angles de déphasage égaux sont associés deux à deux dans une interface de connexion (6), ladite interface de connexion (6) comprenant au moins trois sorties (60a, 60b, 60c) configurées pour alimenter les phases respectives d'un moteur à courant alternatif triphasé.

6. Onduleur (1) selon la revendication précédente, **caractérisé en ce que** les sorties (60a, 60b, 60c) de l'interface de connexion (6) s'étendent parallèlement au plan médian (P) du module capacitif (2).

7. Onduleur (1) selon l'une quelconque des revendications 5 à 6, **caractérisé en ce que** les sorties de l'interface de connexion (60a, 60b, 60c) sont disposées d'un même côté du premier module de puissance (3a) que la première connexion à courant continu (4a).

8. Onduleur (1) selon l'une quelconque des revendications précédentes, **caractérisé en ce que** le premier module de puissance (3a) et le deuxième module de puissance (3b) sont identiques.

9. Onduleur (1) selon l'une quelconque des revendications précédentes, **caractérisé en ce que** le module capacitif (2) est une capacité de liaison (2).

10. Engin de mobilité **caractérisé en ce qu'**il comprend un onduleur (1) selon l'une quelconque des revendications précédentes.
